# EUROPEAN PATENT SPECIFICATION

(11) **EP 2 765 336 B1**
(45) Date of publication and mention of the grant of the patent: **14.12.2016**
(21) Application number: 14386001.3
(22) Date of filing: 06.02.2014
(51) Int. Cl.: F16H 61/16, F16H 61/18, F16H 61/22, F16H 63/34

(54) **System protection of the engine and of the manual gearbox (sasman) due to wrong driver's action**
Systemschutz des Motors und des Schaltgetriebes (Sasman) vor falscher Fahrerhandlung
Protection du système d'un moteur et de la boîte de vitesse manuelle (sasman) dues à une mauvaise action du conducteur

(30) Priority: 08.02.2013 GR 20130100076
(43) Date of publication of application: 13.08.2014
(73) Proprietor: Tzakos, Dimitrios, 11141 Athens (GR)
(72) Inventor: Tzakos, Dimitrios, 11141 Athens (GR)

(56) References cited:
- EP-A2- 2 116 747
- DE-A1- 3 742 600
- DE-A1-102006 049 639
- FR-A1- 2 710 713
- US-A1- 2012 297 913

## Description

The invention relates to a mechanoelectric mechanism (mechatronics) which consists from:
1) Basis of insulating material,
2) springs with metal feeler
3) electric/magnetic valves with springs and bolts,.
4) metal bases within which slides the feelers while are nesting the springs.

At the new car models you can not turn the engine on without a full pressing of the clutch. So we can use as an input the position control system of the clutch (The sensor of Flywheel - Disc -Stills -Clutch could be based not in the above system but to be from a different technology and to be installed in a different position depending of the needs of each company and the requirements of the trade).

We also can receive through the CAN BUS of the car and use as an input the following:
1) Only the speed.
2) The speed and the engine rpm.
3) The gearbox speed ratio and the vehicle's speed and/or the engine rpm.

Depending of the above inputs, we will receive 6 outputs which will open or close the 6 electromagnetic valves.

It is a well-known fact that the mechanical gearbox is able to receive at any time and at any speed even with a certain difficulty any lesser gear (unless perhaps the first gear in just a few models of cars).

This way, if for example from the 5th gear we shift into the 4th instead of the 6th (while the engine rpm with the 5th gear is more than 5000), then the rpm will highly exceed the maximum rpm allowed and defined by the electrical stopper resulting in a much plausible and serious engine and gearbox damage.

At the same time due to the sudden and high-rev engine and heavy braking that would follow there can be unforeseen consequences and risk to the road path of the car because the driver's surprise caught unaware. Additionally a driver could try to insert a gearbox ratio without having push the clutch properly. The result could be a damage of the manual gearbox.

A system for protecting an engine and a manual transmission is known from EP 2 116 747 A2, the system consisting of a basis, metal feelers which can be moved backward from the gear lever of the manual transmission and electromagnetic valves which can stop the backward movement of the 6 feelers from the gear lever, the final result being to stop the gear lever to insert any unwished gearbox ratio due to a wrong driver's activity.

The new invention will forbid the driver the following:
1) To try to add any gearbox ratio without having push the clutch properly.
2) To downshift when his action is prone to cause a mechanical rise of the engine rpm quite higher (that limit can be set according to our will) than the limit of the electrical rpm stopper as defined by the manufacturer.

The obvious advantage of the new invention is the avoiding of a huge damage either in engine or in manual gearbox.

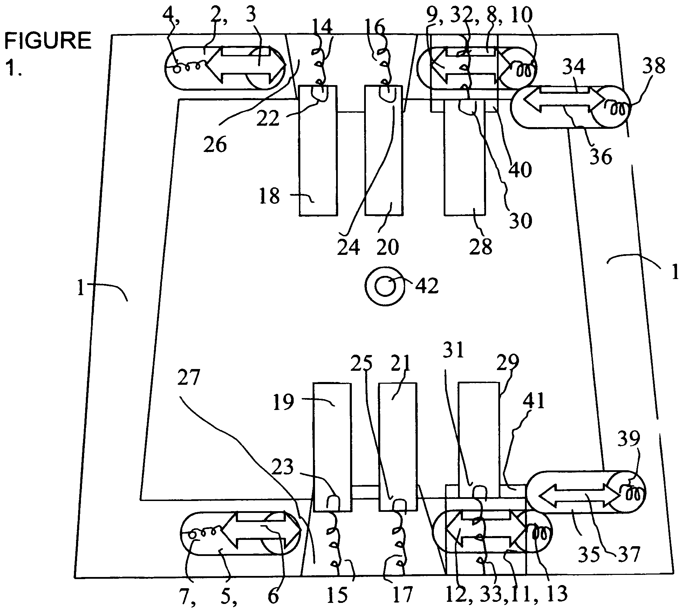

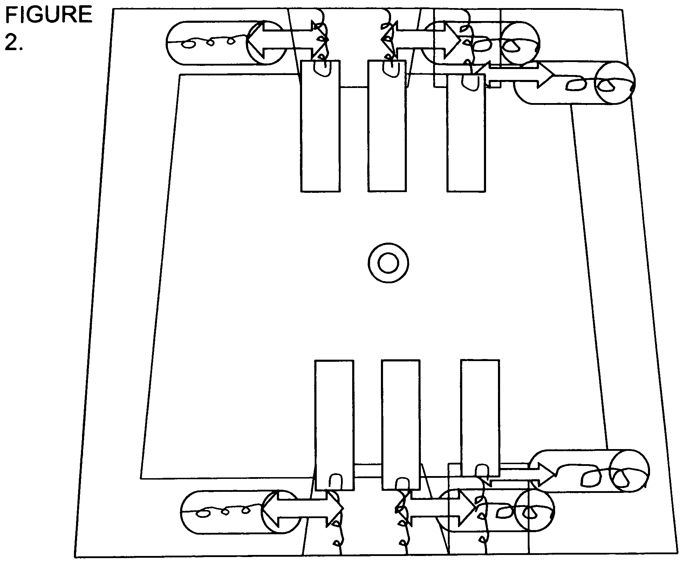

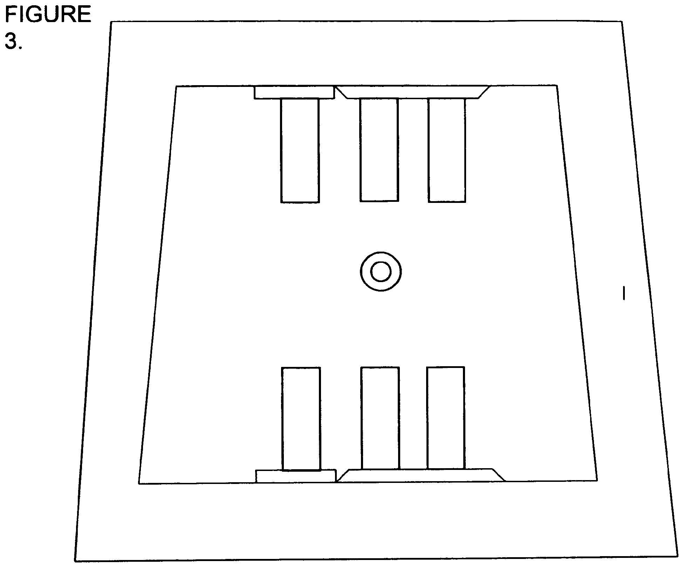

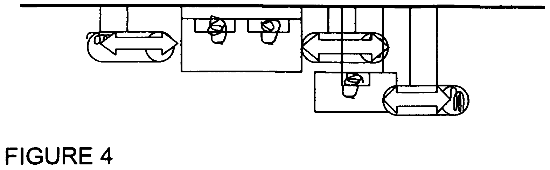

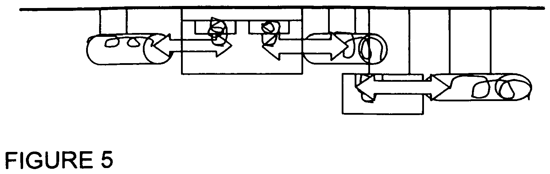

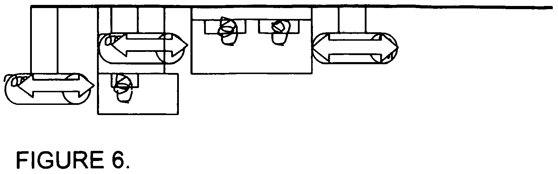

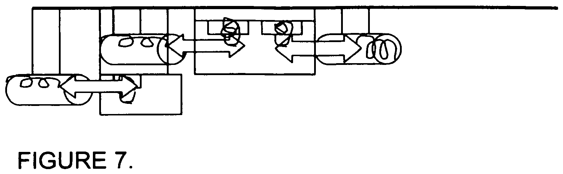

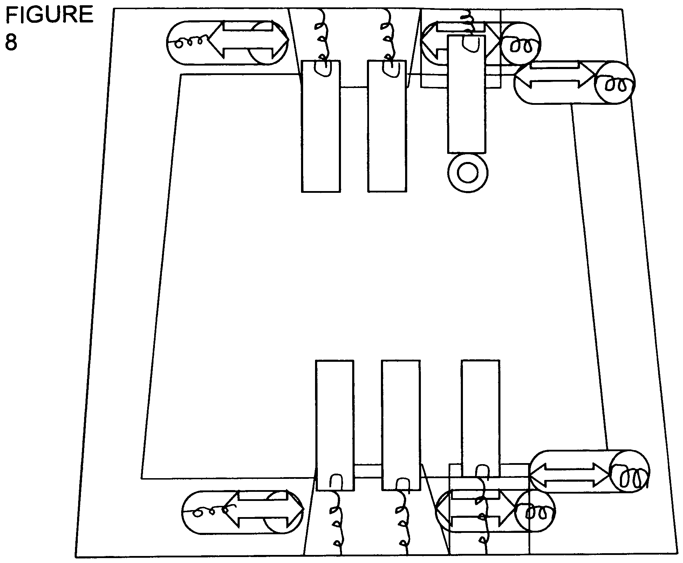

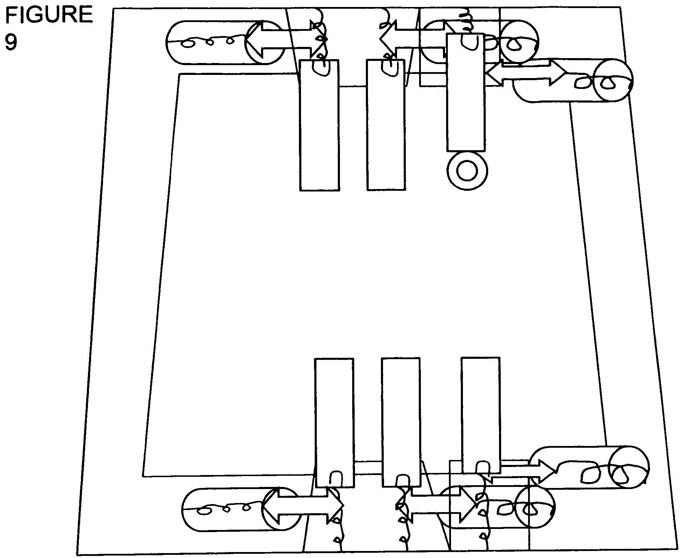

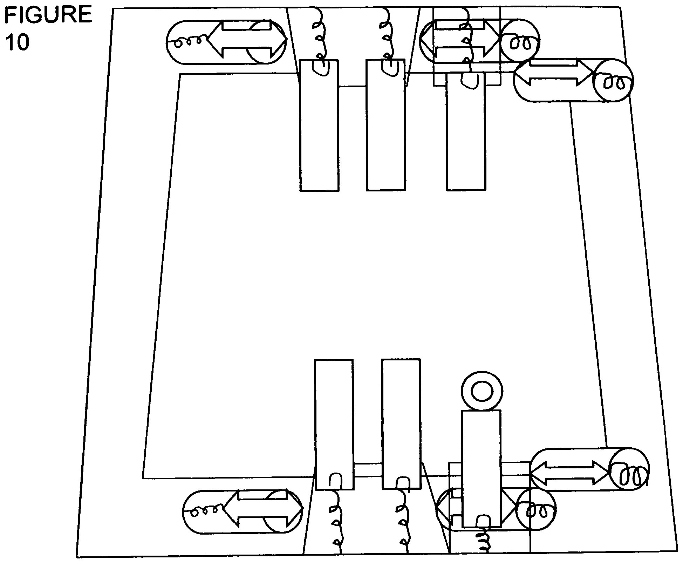

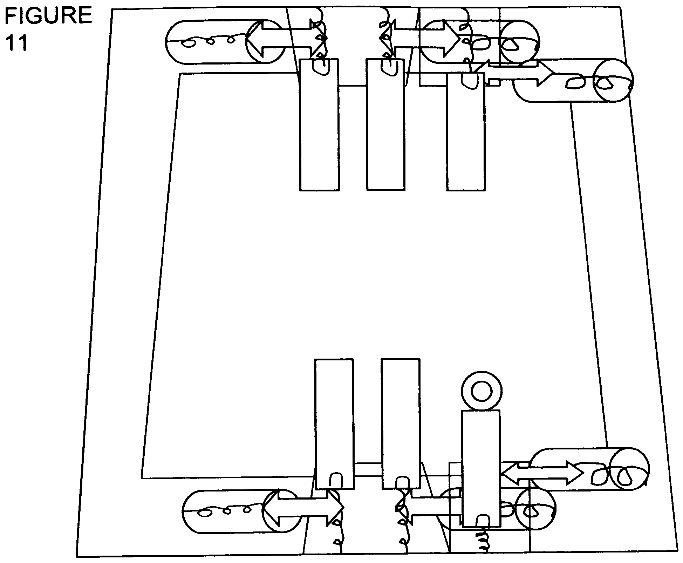

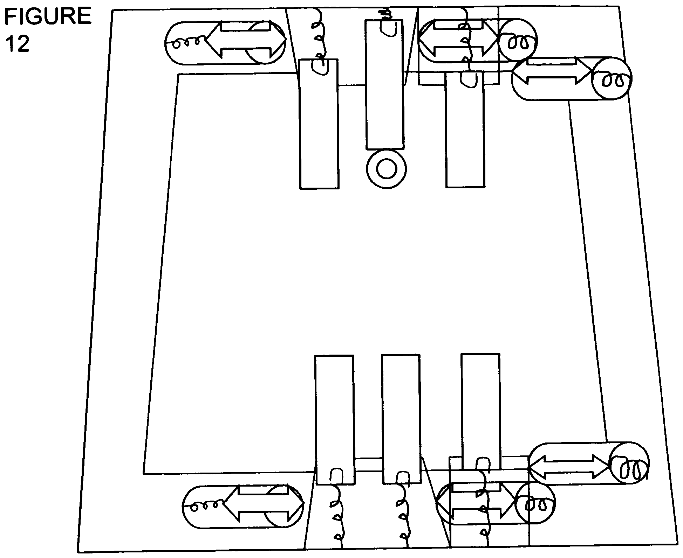

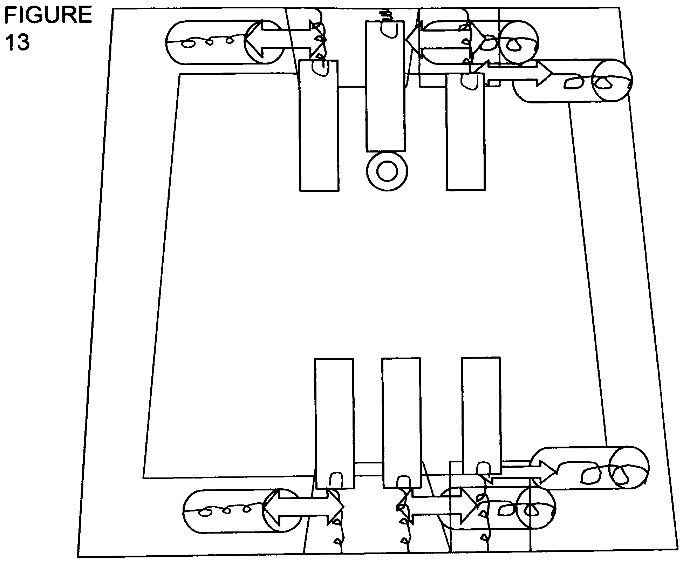

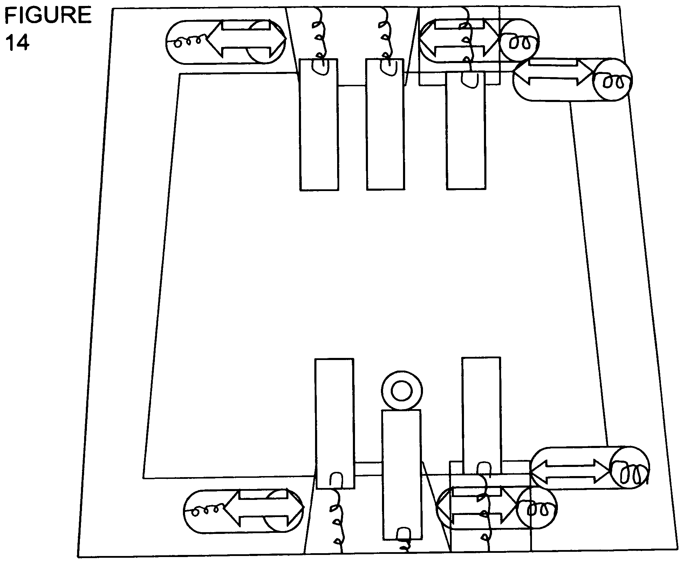

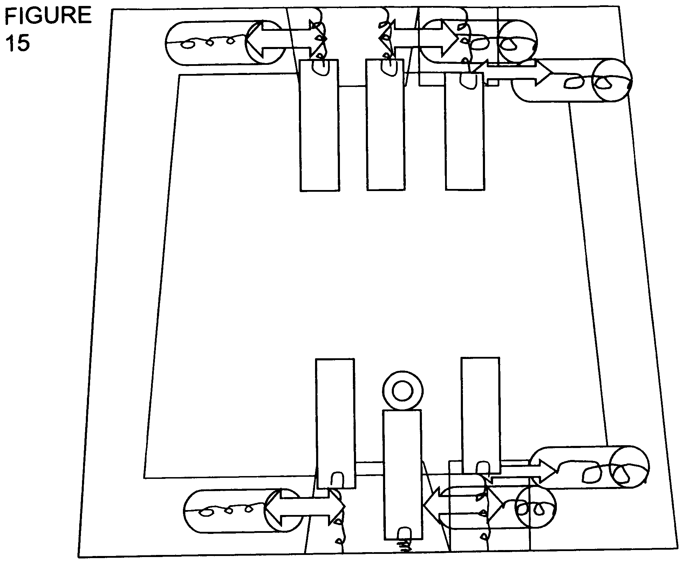

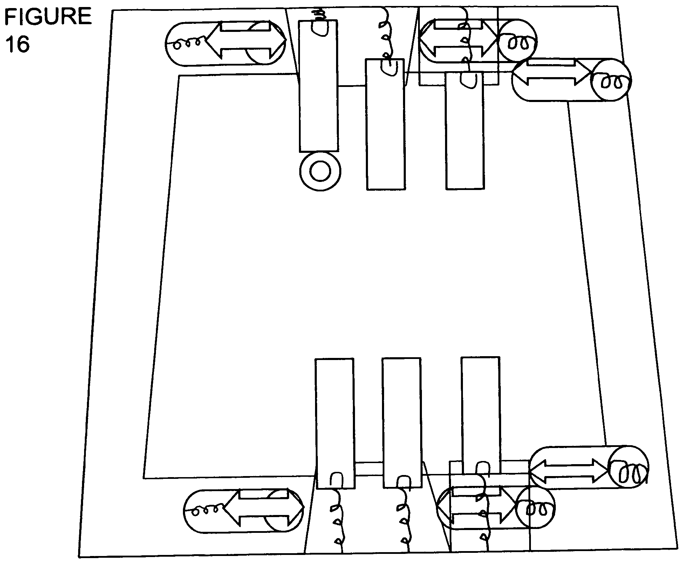

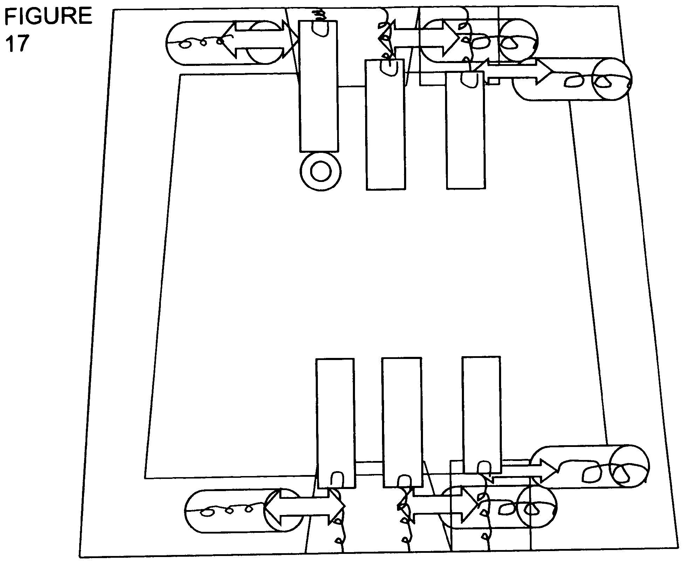

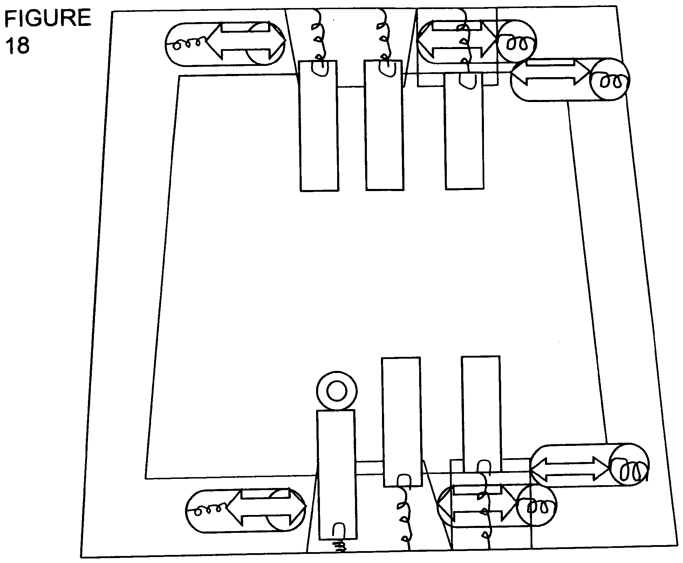

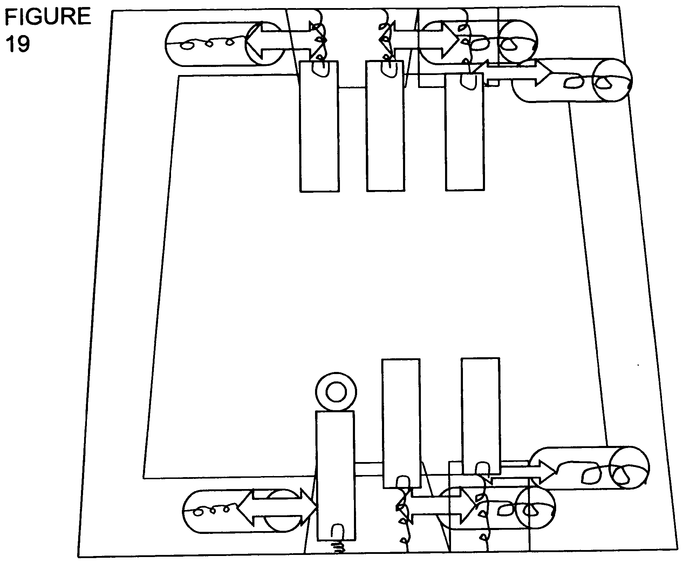

In the appended drawings we see the new invention at the case of double protection (case 1 and 2 above) at a bottom view with the clutch having been pushed (Figure 1), at a bottom view without the clutch having been pushed (Figure 2), top view (Figure 3), side view of first, third , fifth gearbox ratio with the clutch having been pushed (Figure 4), top view (Figure 3), side view first, third , fifth gearbox ratio without the clutch having been pushed (Figure 5), side view of second, fourth , sixth gearbox ratio with the clutch having been pushed (Figure 6), side view of second, fourth , sixth gearbox ratio without the clutch having been pushed (Figure 7), placing first gearbox ratio with the clutch having been pushed (Figure 8), the clutch have not been pushed and the first gearbox ratio has already been placed (Figure 9), placing second gearbox ratio with the clutch having been pushed (Figure 10), the clutch have not been pushed and the second gearbox ratio has already been placed (Figure 11), placing third gearbox ratio with the clutch having been pushed (Figure 12), the clutch have not been pushed and the third gearbox ratio has already been placed (Figure 13), placing fourth gearbox ratio with the clutch having been pushed (Figure 14), the clutch have not been pushed and the fourth gearbox ratio has already been placed (Figure 15), placing fifth gearbox ratio with the clutch having been pushed (Figure 16), the clutch have not been pushed and the fifth gearbox ratio has already been placed (Figure 17), placing sixth gearbox ratio with the clutch having been pushed (Figure 18), the clutch have not been pushed and the sixth gearbox ratio has already been placed (Figure 19). At the bottom side (Figure 1) we see the invention in a side inverted position while the first and second gearbox ratios appear in a position of the right end. In the same figure the fifth and sixth gearbox ratio appear in a position of the left end. The new invention consists of:
1) Basis of insulating material (1),
2) 6 springs (14, 15, 16, 17, 32, 33)
3) 6 metal feelers (18, 19, 20, 21, 28, 29) incorporating to 6 small vertical protrusions (22, 23, 24, 25, 30, 31) in a ratio of 1:1.
4) 4 metal bases (26, 27, 40, 41) within which slides the 6 feelers (18, 19, 20, 21, 28, 29) while are nesting the 6 springs (14, 15, 16, 17, 32,33). The 6 small vertical protrusions (22, 23, 24, 25, 30, 31) are part of the 6 feelers in a ratio of 1:1.
5) 6 electric/magnetic valves (2, 5, 8, 11, 34, 35) with 6 springs (4, 7, 10, 13, 38, 39) and 6 bolts (3, 6, 9, 12, 36, 37), in a ratio 1:1.
In the case of dual protection (not to be able to add any gearbox ratio without having push the clutch properly and not to be able to downshift when this action is prone to cause a mechanical rise of the engine rpm quite higher than the limit of the electrical rpm stopper as defined by the manufacturer) when the clutch is not pressed (Figures 2, 5, 7) all the 6 electromagnetic solenoid valves (2, 5, 8, 11, 34, 35) are not energized with power grounding, relieving the 6 inner springs (4, 7, 10, 13, 38, 39) and pushing their 6 bolts (3, 6, 9, 12, 36, 37) out which are inserted within the 4 bases (26, 27, 40, 41) so blocking the 6 feeler (18, 19, 20, 21, 28, 29) to the 6 vertical protrusions (22, 23, 24, 25, 30, 31), not allowing the shift lever (42) to enter within any of the 6 gearbox speeds.
With pressing of the clutch (Figures 1, 4, 6) all the 6 electromagnetic solenoid valves (2, 5, 8, 11, 34, 35) are energized with power grounding, the bolts (3, 6, 9, 12, 36, 37) are pulled inside the valves, squeezing the innersprings (4, 7, 10, 13, 38, 39) with the result the 6 feelers (18, 19, 20, 21, 28, 29) to be released and to allow the shift lever (42) to enter within any of the 6 gearbox speeds.
The speed of our engine gives us the opportunity to know any time what would happen if we down-shift a smaller gear ratio by pressing the clutch. If when we put a specific gearbox ratio the engine speed is going to go a level less or equal than the limit set by the electronic speed limiter then the valve of this particular gearbox ratio remains open when we have already pushed the clutch and we can place the desirable gear ratio.
If when we put a specific gearbox ratio the engine speed is going to go up a level greater than the limit set by the electronic speed limiter then the valve of this specific gearbox ratio remains on, relieving the inner spring and pushing it's bolt out so blocking the feeler to vertical protrusion, not allowing the shift lever to enter in this particular gearbox ratio even we fully press the clutch. In the Figures (4, 6) we see the side view of the invention with the clutch having been pressed. In the Figures (5, 7) we see the side view of the invention with the clutch not having been pressed.
We also see that the bases (26, 40) and (27, 41) have been placed in a different level depending of the free space of each vehicle. It can be implemented both or one of each protection (not to be able to add any gearbox ratio without having push the clutch properly and not to be able to downshift when this action is prone to cause a mechanical rise of the engine rpm quite higher than the limit of the electrical rpm stopper as defined by the manufacturer).
In both cases the mechanical part remains unchanged and only the reason of why and when the electro-magnetic valves are open or close is changed. In the case of dual protection (not to be able to add any gearbox ratio without having push the clutch properly and not to be able to downshift when this action is prone to cause a mechanical rise of the engine rpm quite higher than the limit of the electrical rpm stopper as defined by the manufacturer) the operation is as has already been described above (the 6 valves are activated not allowing to put any gearbox ratio speed and open by pressing the clutch except of these that should cause a mechanical rise of the engine rpm quite higher than the limit of the electrical rpm stopper). In the case of one protection (not to be able to downshift when this action is prone to cause a mechanical rise of the engine rpm quite higher than the limit of the electrical rpm stopper as defined by the manufacturer) then the pressing of the clutch has no influence to the electro-magnetic valves. The electro-magnetic valves are always open. They close only in the case not to allow to put any gearbox ratio which should cause a mechanical rise of the engine rpm quite higher than the limit of the electrical rpm stopper. In this case the electro-magnetic valve (5) and the feeler (19) could be removed as unnecessary. In the case of one protection ( not to be able to add any gearbox ratio without having push the clutch properly) the 6 valves are activated not allowing to put any gearbox ratio speed and open by pressing the clutch.

Placing first gearbox ratio (Figures 8 and 9) : In the case of dual protection ( not to be able to add any gearbox ratio without having push the clutch properly and not to be able to downshift when this action is prone to cause a mechanical rise of the engine rpm quite higher than the limit of the electrical rpm stopper as defined by the manufacturer) with pressing of the clutch (Figure 8) all the 6 electromagnetic solenoid valves are energized with power grounding, the bolts are pulled inside the valves squeezing the innersprings with the result the 6 feelers to be released and to allow the positioning of the first gearbox ratio. The spring (32) is compressed as the feeler (28) moves backward from the gear lever (42). If we not press the clutch (Figure 9) the 6 valves are activated not allowing to put any gearbox ratio.

Placing second gearbox ratio (Figures 10 and 11) : In the case of dual protection ( not to be able to add any gearbox ratio without having push the clutch properly and not to be able to downshift when this action is prone to cause a mechanical rise of the engine rpm quite higher than the limit of the electrical rpm stopper as defined by the manufacturer) with pressing of the clutch (Figure 10) all the 6 electromagnetic solenoid valves are energized with power grounding, the bolts are pulled inside the valves squeezing the innersprings with the result the 6 feelers to be released and to allow the positioning of the second gearbox ratio. The spring (32) expands dragging the feeler (28) forward. The spring (33) is compressed as the feeler (29) moves backward from the gear lever (42). If we not press the clutch (Figure 11) the 6 valves are activated not allowing to put any gearbox ratio. The speed of our engine gives us the opportunity to know any time what would happen if down-shift a smaller gearbox ratio by pressing the clutch.
If when we put first gearbox ratio the engine speed is going to go a level less or equal than the limit set by the electronic speed limiter then the valve (34) remains open when we have already pushed the clutch and we can place the first gearbox ratio.
If when we put first gearbox ratio the engine speed is going to go up a level greater than the limit set by the electronic speed limiter then the valve (34) remains on, relieving the inner spring (38) and pushing it's bolt (36) out so blocking the feeler (28) to vertical protrusion (30), not allowing the shift lever (42) to enter in the first gearbox ratio even we fully press the clutch.

Placing third gearbox ratio (Figures 12 and 13) : In the case of dual protection ( not to be able to add any gearbox ratio without having push the clutch properly and not to be able to downshift when this action is prone to cause a mechanical rise of the engine rpm quite higher than the limit of the electrical rpm stopper as defined by the manufacturer) with pressing of the clutch (Figure 12) all the 6 electromagnetic solenoid valves are energized with power grounding, the bolts are pulled inside the valves squeezing the innersprings with the result the 6 feelers to be released and to allow the positioning of the third gearbox ratio. The spring (33) expands dragging the feeler (29) forward. The spring (16) is compressed as the feeler (20) moves backward from the gear lever (42). If we not press the clutch (Figure 13) the 6 valves are activated not allowing to put any gearbox ratio. The speed of our engine gives us the opportunity to know any time what would happen if down-shift a smaller gearbox ratio by pressing the clutch.
If when we put second or first gearbox ratio the engine speed is going to go a level less or equal than the limit set by the electronic speed limiter then the valves (34, 35) remains open when we have already pushed the clutch and we can place the second or first gearbox ratio.
If when we put second or first gearbox ratio the engine speed is going to go up a level greater than the limit set by the electronic speed limiter then the valves (34, 35) remains on, relieving the inner springs (38, 39) and pushing their bolts (36, 37) out so blocking the feelers (28,29) to vertical protrusion (30, 31), not allowing the shift lever (42) to enter in the first only or first and second gearbox ratio even we fully press the clutch. If again the engine revs drop and then another and allowed the introduction of the first gearbox ratio direct link from the third gear ratio which we already have installed if fully press the clutch and the engine speed does not increase does not increase beyond the limit of the electronic rev limiter.

Placing fourth gearbox ratio (Figures 14 and 15) : In the case of dual protection ( not to be able to add any gearbox ratio without having push the clutch properly and not to be able to downshift when this action is prone to cause a mechanical rise of the engine rpm quite higher than the limit of the electrical rpm stopper as defined by the manufacturer) with pressing of the clutch (Figure 14) all the 6 electromagnetic solenoid valves are energized with power grounding, the bolts are pulled inside the valves squeezing the innersprings with the result the 6 feelers to be released and to allow the positioning of the fourth gearbox ratio. The spring (16) expands dragging the feeler (20) forward. The spring (17) is compressed as the feeler (21) moves backward from the gear lever (42). If we not press the clutch (Figure 15) the 6 valves are activated not allowing to put any gearbox ratio. The speed of our engine gives us the opportunity to know any time what would happen if down-shift a smaller gearbox ratio by pressing the clutch.
If when we put third, second or first gearbox ratio the engine speed is going to go a level less or equal than the limit set by the electronic speed limiter then the valves (34, 35, 8) remains open when we have already pushed the clutch and we can place the third, second or first gearbox ratio. If when we put third, second or first gearbox ratio the engine speed is going to go up a level greater than the limit set by the electronic speed limiter then the valves (34, 35,8) remains on, relieving the inner springs (38, 39,10) and pushing their bolts (36,37,9) out so blocking the feelers (28, 29,20) to vertical protrusion (30, 31,24), not allowing the shift lever (42) to enter in the first only or first and second or first and second and third gearbox ratio even we fully press the clutch. If again the engine revs drop and then another then allowed the introduction of the third gearbox ratio direct link from the fourth gear ratio which we already have installed if fully press the clutch and the engine speed does not increase beyond the limit of the electronic rev limiter. If again the engine revs drop and then another and allowed the introduction of the second gearbox ratio direct link from the fourth gear ratio which we already have installed if fully press the clutch and the engine speed does not increase does not increase beyond the limit of the electronic rev limiter. If again the engine revs drop and then another and allowed the introduction of the first gearbox ratio direct link from the fourth gear ratio which we already have installed if fully press the clutch and the engine speed does not increase does not increase beyond the limit of the electronic rev limiter.

Placing fifth gearbox ratio (Figures 16 and 17) : In the case of dual protection ( not to be able to add any gearbox ratio without having push the clutch properly and not to be able to downshift when this action is prone to cause a mechanical rise of the engine rpm quite higher than the limit of the electrical rpm stopper as defined by the manufacturer) with pressing of the clutch (Figure 16) all the 6 electromagnetic solenoid valves are energized with power grounding, the bolts are pulled inside the valves squeezing the innersprings with the result the 6 feelers to be released and to allow the positioning of the fifth gearbox ratio. The spring (17) expands dragging the feeler (21) forward. The spring (14) is compressed as the feeler (18) moves backward from the gear lever (42). If we not press the clutch (Figure 17) the 6 valves are activated not allowing to put any gearbox ratio. The speed of our engine gives us the opportunity to know any time what would happen if down-shift a smaller gearbox ratio by pressing the clutch.
If when we put fourth, third, second or first gearbox ratio the engine speed is going to go a level less or equal than the limit set by the electronic speed limiter then the valves (34, 35,8, 11) remains open when we have already pushed the clutch and we can place the fourth, third, second or first gearbox ratio.
If when we put fourth, third, second or first gearbox ratio the engine speed is going to go up a level greater than the limit set by the electronic speed limiter then the valves (34, 35,8, 11) remains on, relieving the inner springs (38, 39,10, 13) and pushing their bolts (36,37,9, 12) out so blocking the feelers (28, 29,20, 21) to vertical protrusion (30, 31,24, 25), not allowing the shift lever (42) to enter in the first only or first and second or first and second and third or first and second and third and fourth gearbox ratio even we fully press the clutch. If again the engine revs drop and then another then allowed the introduction of the fourth gearbox ratio direct link from the fifth gear ratio which we already have installed if fully press the clutch and the engine speed does not increase beyond the limit of the electronic rev limiter. If again the engine revs drop and then another then allowed the introduction of the third gearbox ratio direct link from the fifth gear ratio which we already have installed if fully press the clutch and the engine speed does not increase beyond the limit of the electronic rev limiter. If again the engine revs drop and then another and allowed the introduction of the second gearbox ratio direct link from the fifth gear ratio which we already have installed if fully press the clutch and the engine speed does not increase does not increase beyond the limit of the electronic rev limiter. If again the engine revs drop and then another and allowed the introduction of the first gearbox ratio direct link from the fifth gear ratio which we already have installed if fully press the clutch and the engine speed does not increase does not increase beyond the limit of the electronic rev limiter.

Placing sixth gearbox ratio (Figures 18 and 19) : In the case of dual protection ( not to be able to add any gearbox ratio without having push the clutch properly and not to be able to downshift when this action is prone to cause a mechanical rise of the engine rpm quite higher than the limit of the electrical rpm stopper as defined by the manufacturer) with pressing of the clutch (Figure 18) all the 6 electromagnetic solenoid valves are energized with power grounding, the bolts are pulled inside the valves squeezing the innersprings with the result the 6 feelers to be released and to allow the positioning of the FFFF gearbox ratio. The spring (14) expands dragging the feeler (18) forward. The spring (15) is compressed as the feeler (19) moves backward from the gear lever (42). If we not press the clutch (Figure 19) the 6 valves are activated not allowing to put any gearbox ratio. The speed of our engine gives us the opportunity to know any time what would happen if down-shift a smaller gearbox ratio by pressing the clutch.
If when we put fifth or fourth or third or second or first gearbox ratio the engine speed is going to go a level less or equal than the limit set by the electronic speed limiter then the valves (34, 35, 8, 11, 2) remains open when we have already pushed the clutch and we can place the fifth or fourth or third or second or first gearbox ratio.
If when we put fifth or fourth or third or second or first gearbox ratio the engine speed is going to go up a level greater than the limit set by the electronic speed limiter then the valves (34, 35,8, 11, 2) remains on, relieving the inner springs (38, 39,10, 13, 4) and pushing their bolts (36,37,9, 12, 3) out so blocking the feelers (28, 29,20, 21, 18) to vertical protrusion (30, 31,24, 25, 22), not allowing the shift lever (42) to enter in the first only or first and second or first and second and third or first and second and third and fourth or first and second and third and fourth and fifth gearbox ratio even we fully press the clutch. If again the engine revs drop and then another then allowed the introduction of the fifth gearbox ratio direct link from the sixth gear ratio which we already have installed if fully press the clutch and the engine speed does not increase beyond the limit of the electronic rev limiter. If again the engine revs drop and then another then allowed the introduction of the fourth gearbox ratio direct link from the sixth gear ratio which we already have installed if fully press the clutch and the engine speed does not increase beyond the limit of the electronic rev limiter. If again the engine revs drop and then another then allowed the introduction of the third gearbox ratio direct link from the sixth gear ratio which we already have installed if fully press the clutch and the engine speed does not increase beyond the limit of the electronic rev limiter. If again the engine revs drop and then another and allowed the introduction of the second gearbox ratio direct link from the sixth gear ratio which we already have installed if fully press the clutch and the engine speed does not increase does not increase beyond the limit of the electronic rev limiter. If again the engine revs drop and then another and allowed the introduction of the first gearbox ratio direct link from the sixth gear ratio which we already have installed if fully press the clutch and the engine speed does not increase does not increase beyond the limit of the electronic rev limiter.

## Claims

1. A system for protecting an engine and a manual gearbox consisting of:
1) a Basis (1),
2) metal feelers (18, 19, 20, 21, 28, 29) with springs (14, 15, 16, 17, 32, 33) incorporating small vertical protrusions (22, 23, 24, 25, 30, 31) in a ratio of 1:1. The springs (14, 15, 16, 17, 32, 33) are compressed as the feelers (18, 19, 20, 21, 28, 29) moves backward from the gear lever (42) of the manual gearbox.
3) On the basis (1) exist at least 2 other bases (26, 27, 40, 41) within which slides the feelers (18, 19, 20, 21, 28, 29) while are nesting the springs (14, 15, 16, 17, 32,33). The small vertical protrusions (22, 23, 24, 25, 30, 31) are part of the feelers in a ratio of 1:1. These small vertical protrusions (22, 23, 24, 25, 30, 31) are used to stop with the help of valves, the backward movement of the feelers (18, 19, 20, 21, 28, 29) from the gear lever (42).
4) Electromagnetic or pneumatic valves (2, 5, 8, 11, 34, 35) with bolts (3, 6, 9, 12, 36, 37), in a ratio 1:1. If these bolts (3, 6, 9, 12, 36, 37) have been moved forward then they have been inserted behind the back side of the small vertical protrusions (22, 23, 24, 25, 30, 31) and they can stop the backward movement of the feeters (18, 19, 20, 21, 28, 29) from the gear lever (42). The final result is to stop the gear lever (42) to insert to any unwished gearbox ratio due to a wrong driver's activity.
and whereby the number of the metal feelers, the number of the small vertical protrusions, the number of the springs which are behind of the metal feelers and the number of the valves are the same with the number of the gearbox ratios. Also the number of the bases within which slides the feelers while are nesting the springs can be between 2 and the number of the gearbox ratios.

2. A system according to claim 1 **characterized in that** the number of gear ratios is 6.

## Patentansprüche

1. Ein Motorschutzsystem und ein manuelles Getriebe, bestehend aus:
1) Eine Basis (1),
2) Metallantennen (18, 19, 20, 21, 28, 29) mit Federn (14, 15, 16, 17, 32, 33) mit kleinen vertikalen Vorsprünge (22, 23, 24, 25, 30, 31) im Verhältnis von 1: 1. Die Federn (14, 15, 16, 17, 32, 33) als die Antennen komprimieren (18, 19, 20, 21, 28, 29) bewegen rückwärts von der Schieber (42) des Schaltgetriebes.
3)Auf der Basis (1) sind mindestens zwei andere Basen (26, 27, 40, 41), innerhalb dessen gleitet die Fühler (18, 19, 20, 21, 28, 29), während die Federn nisten (14, 15, 16, 17, 32,33). Die kleinen vertikalen Vorsprünge (22, 23, 24, 25, 30, 31) sind Bestandteil der Fühlern in einem Verhältnis von 1: 1. Diese kleinen vertikalen Vorsprünge (22, 23, 24, 25, 30, 31) verwendet werden die Rückwärtsbewegung von den Fühlern (18, 19, 20, 21, 28, 29) des Schalthebels (42) mit Hilfe von Ventilen zu stoppen.
4) Elektromagnetische oder Pneumatikventile (2, 5, 8, 11, 34, 35) mit Bolzen (3, 6, 9, 12, 36, 37) in einem Verhältnis von 1: 1. Wenn dieser Bolzen (3, 6, 9, 12, 36, 37) vorwärts bewegen, werden sie hinter der Rückseite der kleinen vertikalen Vorsprünge eingefügt (22, 23, 24, 25, 30, 31) und die Bewegung der hinteren Sensoren des Schalthebels (42) stoppen (18, 19, 20, 21, 28, 29).
Das Endergebnis ist der Schalthebel (42) zu stoppen, keine Gänge über unerwünschte Übertragung einzufügen aufgrund der Aktivität eines schlechter Fahrer. In diesen Ventilen die Anzahl der Metallantennen, die Zahl der kleinen vertikalen Vorsprünge, die Anzahl der Federn, die hinter Metallantennen und die Anzahl der Ventile ist die gleiche wie die Anzahl der Gänge des Getriebes. Da die Zahl der Basen innerhalb dessen gleiten die Sensoren, während die Feder nisten zwischen 2 und die Anzahl der Gänge des Getriebes sein kann.

2. Ein System nach ersten Anspruch, kennengezeichnet dadurch, dass die Anzahl der 6 Gängen ist.

## Revendications

1. Un système de protection d'un moteur et une boîte de vitesses manuelle comprenant:
1) Une base (1),
2) antennes métalliques (18, 19, 20, 21, 28, 29) avec des ressorts (14, 15, 16, 17, 32, 33) comportant de petites saillies verticales (22, 23, 24, 25, 30, 31) en rapport de 1:1. Les ressorts (14, 15, 16, 17, 32, 33) sont comprimés comme les antennes (18, 19, 20, 21, 28, 29) se déplacent vers l'arrière à partir du levier de vitesses (42) de la boîte de vitesses manuelle.
3) Sur la base (1) existent au moins 2 autres bases (26, 27,40, 41) dans lesquelles glissent les palpeurs (18, 19, 20, 21, 28, 29) et nichent les ressorts (14, 15, 16, 17, 32,33). Les petites protubérances verticales (22, 23, 24, 25, 30, 31) font partie des palpeurs dans un rapport de 1:1. Ces petites saillies verticales (22, 23, 24, 25, 30, 31) sont utilisées pour arrêter avec l'aide des valves, le mouvement vers l'arrière des palpeurs (18, 19, 20, 21, 28, 29) de l'engrenage du levier (42).
4) Des vannes électromagnétiques ou pneumatiques (2, 5, 8, 11, 34, 35) avec des boulons (3, 6, 9, 12, 36, 37) dans un rapport de 1:1. Si ces boulons (3, 6, 9, 12, 36, 37) se déplacent vers l'avant, ils s'insèrent derrière la face arrière des petites saillies verticales (22, 23, 24, 25, 30, 31) et ils peuvent arrêter le mouvement vers l'arrière des palpeurs (18, 19, 20, 21, 28, 29) du levier de vitesse (42). Le résultat final est d'arrêter le levier de vitesse (42) d'insérer tout rapport de la boîte de vitesses non souhaitée en raison de l'activité d'un mauvais pilote. Dans ces vannes le nombre d'antennes métalliques, le nombre de petites saillies verticales, le nombre de ressorts qui sont derrière des antennes métalliques et le nombre de soupapes est le même que le nombre de rapports de la boîte de vitesses. Aussi le nombre de bases au sein de laquelle glissent les palpeurs pendant que les ressorts y nichent peut être entre 2 et le nombre de rapports de la boîte de vitesses.

2. Un système selon la 1ere réclamation, **caractérisée en ce que** le nombre de rapports est 6.
